# EUROPEAN PATENT APPLICATION

(11) **EP 3 366 544 A1**
(43) Date of publication of application: **29.08.2018**
(21) Application number: 16857610.6
(22) Date of filing: 23.03.2016
(51) Int. Cl.: B62B 9/10, B62B 9/14, F24F 7/00, F24F 13/08, F24F 13/20, F24F 13/28, B01D 46/00, B01D 46/42

(54) **VENTILATION DEVICE FOR BABY-CARRIAGE COVER**

(30) Priority: 22.10.2015 KR 20150147180
(71) Applicant: Kim, Eui-Woong, Seoul 07057 (KR)
(72) Inventor: Kim, Eui-Woong, Seoul 07057 (KR)
(74) Representative: Goddar, Heinz J.
(86) International application number: PCT/KR2016/002887
(87) International publication number: WO 2017/069352

(57) **Abstract**

Provided is a ventilation and air cleaning device for a protective cover installed at a four-wheel or three-wheel baby carriage, the ventilation and air cleaning device includes at least one natural ventilation type filter so that an inside of the baby carriage cover is naturally ventilated due to temperatures of the inside and outside of the baby carriage cover and/or a pressure difference therebetween and furthermore, air is purified so that an infant or child who rides on a seat of the baby carriage is calmed, the infant's or child's health is kept in good condition and the infant or child takes comfortable sleep.

## Description

### TECHNICAL FIELD

The present invention relates to a ventilation and air cleaning device for a protective cover installed at a four-wheel or three-wheel baby carriage.

### BACKGROUND ART

In general, baby carriages are largely classified into a canopy installation type baby carriage in which a seat is installed at a three-wheel or four-wheel frame and a canopy is installed at a top portion of the seat installed at the frame, and a canopy non-installation type baby carriage in which a seat is installed at a three-wheel or four-wheel frame and no canopy is installed at a top portion of the seat installed at the frame. Thus, in order to prevent an infant or child from being exposed to exhaust fumes of a vehicle, yellow dust, various contamination materials, and ultraviolet (UV) rays, etc. when the infant or child rides on the seat, in the canopy installation type baby carriage, a plastic film or fabric cover that covers the seat and the frame is installed at the canopy, and in the canopy non-installation type baby carriage, the plastic film or fabric cover is installed at the frame.

However, when the cover is installed at the canopy or the frame, as described above, the infant or child who rides on the seat is blocked from atmospheric air and can be protected from various contamination materials and UV rays. However, because the inside of the cover is almost maintained in a sealed state, air in the cover is heated by solar heat during the usage of the baby carriage, and due to the infant's or child's breathing, temperature is further increased, and an oxygen deficiency phenomenon occurs such that the infant's or child's health is damaged.

It is known that, in order to solve the problem relating to damage of the infant's or child's health, air vent holes are installed in sides of the cover so that the inside of the cover is ventilated through the air vent holes. However, when the air vent holes are installed in the sides of the cover, another problem that the function of protecting the infant or child from contamination materials, etc. that is the installation purpose of the cover is remarkably lowered, occurs.

Meanwhile, in order to solve the problems relating to air heating in the cover and an increased oxygen deficiency phenomenon due to the infant's or child's breathing, a personal protection in which a filter unit is installed at a frame of a top portion of a seat of a baby carriage having a cover installed at a canopy, is disclosed in Patent document 1(U.S. Patent No. 6,068,322 A).

The personal protection of Patent document 1 includes the cover installed at the canopy to cover the seat and the frame in a canopy installation type baby carriage and the filter unit installed at the frame of the baby carriage. The filter unit is configured in such a way that a fan is installed at a case, a battery and a filter element are built in the filter unit, the filter element sucks atmospheric air through the fan, filters contamination materials from the atmospheric air and then supplies the filtered atmospheric air into the cover.

### DETAILED DESCRIPTION OF THE INVENTION

### TECHNICAL PROBLEM

However, the filter unit installed at the personal protection of Patent document 1 described above that is a compulsively-driven type using a power supply unit has an advantage in that atmospheric air from which contamination materials are filtered, is supplied into an infant or child riding space. However, noise occurs due to driving of the fane, and the filtered air is discharged toward the infant's or child's head part so that the infant's or child's health may be damaged. Also, the infant or child takes sleep usually when riding on the baby carriage, and due to noise and discharge wind pressure, it is difficult for the infant or child to take sleep.

The present invention provides a ventilation device for a baby carriage cover in which an inside of the baby carriage cover is naturally ventilated due to temperatures of the inside and outside of the baby carriage cover and/or a pressure difference therebetween and air is purified so that an infant or child who rides on a seat of the baby carriage is calmed, the infant's or child's health is kept in good condition and the infant or child takes comfortable sleep.

### TECHNICAL SOLUTION

According to an aspect of the present invention, a ventilation device for a baby carriage cover in which the baby carriage cover that covers a seat and a frame is installed at a baby carriage body, the ventilation device includes at least one natural ventilation type filter installed at the baby carriage cover, wherein the natural ventilation type filter may include: a casing in which a support plate is formed on an outer circumferential surface of one side of a filter support container, the support plate is fixed to a periphery of a hole formed in the baby carriage cover so that the filter support container is exposed to an outside of the baby carriage cover; a filter element in which a plurality of protrusions are formed on a synthetic resin film, the synthetic resin film is charged, the charged synthetic resin film is wound in a cylindrical shape so as to form ventilation passages that are parallel to the filter support container, so that the filter element is inserted into the filter support container; and a cover installed on an outer circumferential surface of the filter support container and including an air volume control unit.

According to another aspect of the present invention, a ventilation device for a baby carriage cover in which the baby carriage cover that covers a seat and a frame is installed at a baby carriage body, the ventilation device includes at least one natural ventilation type filter installed at the baby carriage cover, wherein the natural ventilation type filter may include: a casing in which a support plate is formed on an outer circumferential surface of one side of a filter support container, the support plate is fixed to a periphery of a hole formed in the baby carriage cover so that the filter support container is exposed to an outside of the baby carriage cover; a filter element in which a plurality of protrusions are formed on a synthetic resin film, the synthetic resin film is charged, the charged synthetic resin film is wound in a cylindrical shape so as to form ventilation passages that are parallel to the filter support container, so that the filter element is inserted into the filter support container; a fixing member in which a fixing plate is formed on an end of a support container in a circumferential direction of the support container and the support container is inserted into an outer circumferential surface of the filter support container so that the fixing plate is in close contact with a periphery of a hole formed in the baby carriage cover; and a cover hung on the support container on an outer circumferential surface of the filter support container and including an air volume control unit.

### DESCRIPTION OF THE DRAWINGS

FIG. 1 is a view illustrating an example of installation of a first embodiment of the present invention;
FIG. 2 is an exploded perspective view of the first embodiment of the present invention;
FIG. 3 is a cross-sectional view of the first embodiment of the present invention;
FIG. 4 is a perspective view of a filter element according to the first embodiment of the present invention;
FIG. 5 is a side view of the filter element according to the first embodiment of the present invention;
FIG. 6 is a view illustrating an example of installation of a second embodiment of the present invention;
FIG. 7 is a perspective view of the second embodiment of the present invention; and
FIG. 8 is a cross-sectional view of the second embodiment of the present invention.

### BEST MODE

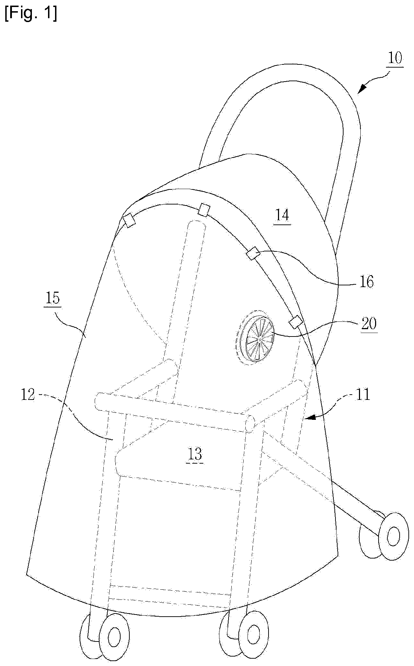

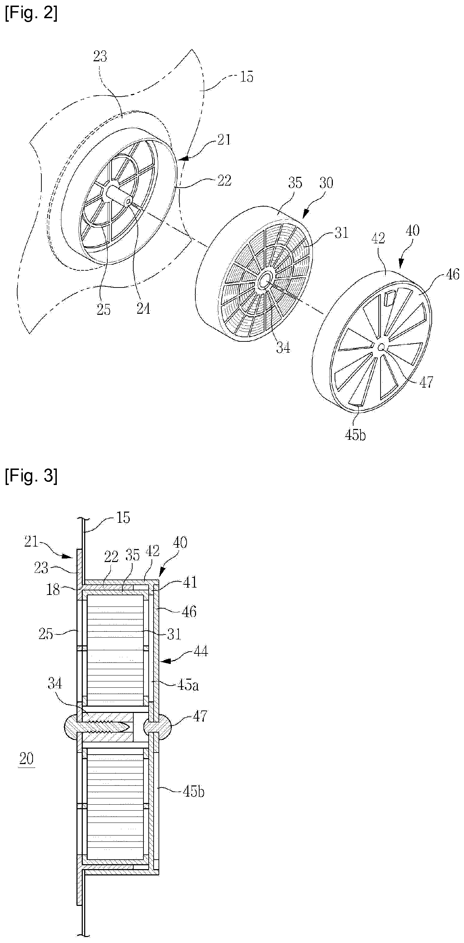

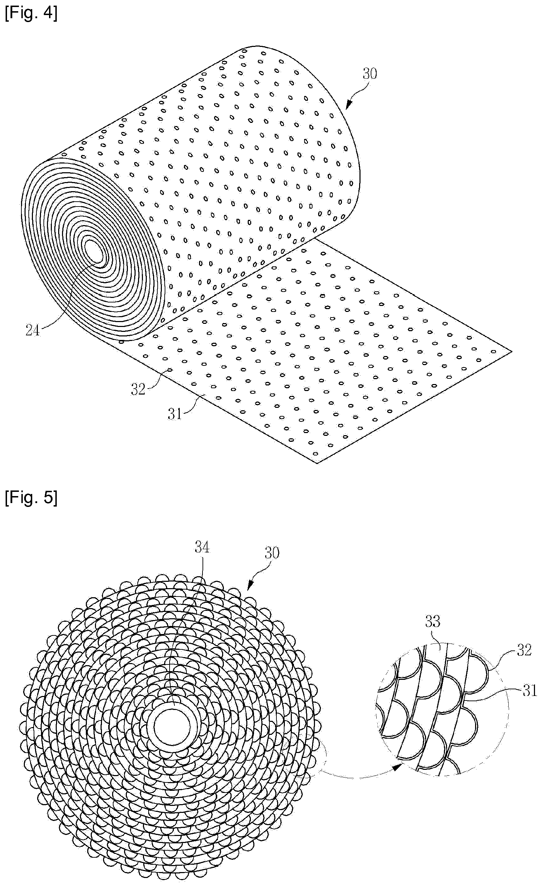

FIG. 1 is a view illustrating an example of installation of a first embodiment of the present invention, FIGS. 2 and 3 are an exploded perspective view and a cross-sectional view of the first embodiment of the present invention, and FIGS. 4 and 5 are perspective view and a side view of a first element according to the first embodiment of the present invention. Reference numeral 10 is a baby carriage. A baby carriage body 11 of the baby carriage 10 has a basic configuration including a frame 12, a seat 13 installed at the frame 12, and a foldable canopy 14 installed at a top portion of the seat 13 of the frame 12 and includes a baby carriage cover 15 installed to be separable from the canopy 14 using a fastening unit 16 such as a clip or Velcro and to cover most parts of the seat 13 and the frame 12.

In the first embodiment of the present invention, a natural ventilation type filter 20 is installed at at least one place of both sides or the front of the baby carriage cover 15 of the baby carriage 10. The natural ventilation type filter 20 may include a casing 21, a filter element 30, and a cover 40.

The casing 21 is configured in such a way that a support plate 23 is formed on an outer circumferential surface of one side of a cylindrical filter support container 22 in a circumferential direction and the support plate 23 is fixed to the periphery of a hole 18 formed in the baby carriage cover 15 so that the filter support container 22 is exposed to an outside of the baby carriage cover 15. A support protrusion 24 is formed in the center of one side of the filter support container 22, and a protective body 25 is installed on the support protrusion 24 and an inner circumferential surface of the filter support container 22.

The filter element 30 is configured in such a way that a plurality of protrusions 32 are irregularly formed on a polymer synthetic resin film 31 and furthermore, the polymer synthetic resin film 31 is charged by a corona discharging device, etc. so that the filter element 30 possesses static electricity, the charged synthetic resin film 31 is wound in a cylindrical shape so as to form ventilation passages 33 that are parallel to the filter support container 22 and to form a bobbin 34 (this bobbin is installed when the charged synthetic resin film 31 is wound in the cylindrical shape) in the center of the filter element 30, so that the filter element 30 can be inserted into the filter support container 22.

As described above, when the filter element 30 is inserted into the filter support container 22 and the bobbin 34 is inserted into the support protrusion 24, the filter element 30 can be conveniently and rapidly inserted into the filter support container 22.

A support body 35 is installed on an outer circumferential surface of the filter element 30 so that the shape of the filter element 30 can be maintained in good condition and furthermore, inserting of the filter element 30 into the filter support container 22 can be more conveniently performed.

The cover 40 includes a cover plate 41 and a support cylinder 42 formed on an outer circumferential surface of the cover plate 41. An air volume control unit 44 is installed at the cover plate 41. The air volume control unit 44 includes a ventilation hole 45a formed in the cover plate 41 in a radial direction at uniform intervals, and the center of an air volume control plate 46 in which a ventilation hole 45b is formed in the radial direction, is combined with the cover plate 41 using a pin 47. Thus, the support cylinder 42 is inserted into the filter support container 22 so that an end of the support cylinder 42 is in close contact with the periphery of the hole 18 formed in the baby carriage cover 15.

In the first embodiment of the present invention described above, the ventilation holes 45a and 45b of the air volume control unit 44 are used in an open state. When an infant or child rides on the seat 13, due to temperatures of the inside and outside of the baby carriage cover 15 and/or a pressure difference therebetween, air in the baby carriage cover 15 is ventilated so that the inside of the baby carriage cover 15 is always maintained in a pleasant environment, and in particular, when external air is introduced into the baby carriage cover 15, various contamination materials included in atmospheric air pass through the ventilation passages 33 of the filter element 30 and are collected by static elasticity of the filter element 30 so that only purified air is always present in the baby carriage cover 15. Furthermore, in a ventilation device according to the first embodiment of the present invention, the ventilation passages 33 of the filter element 30 are formed parallel to a direction in which air is introduced/discharged into/from the baby carriage cover 15 through the hole 18 of the baby carriage cover 15 so that natural ventilation can be performed without using power, as in the related art, there is no occurrence of noise.

The air volume control unit 44 can adjust the amount of opening/closing the ventilation holes 45a and 45b when it's blustery so that the infant or child who rides on the seat 13 can be prevented from being got hit by the wind.

In the above-described first embodiment of the present invention, when the natural ventilation type filter 20 is installed to face both sidewalls of the baby carriage cover 15, external air introduced into the one-side natural ventilation type filter 20 is discharged toward the other-side natural ventilation type filter 20 so that ventilation can be performed in good condition and installation of the filter is preferable.

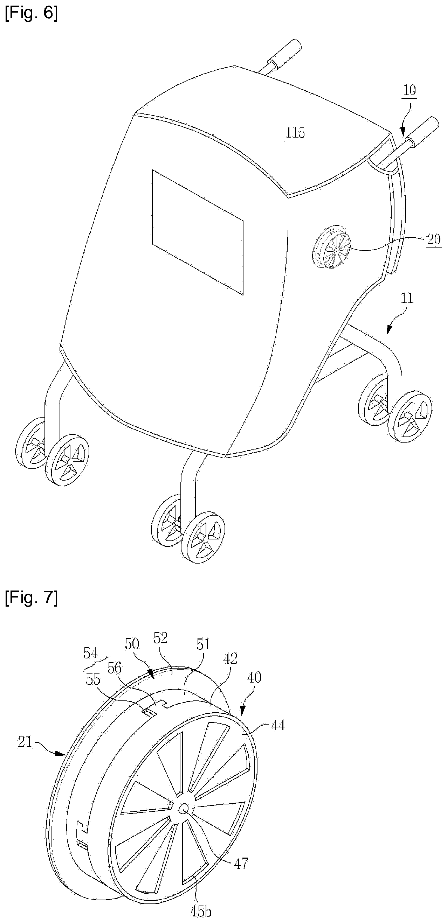

FIG. 6 is a view illustrating an example of installation according to a second embodiment of the present invention. Because the present invention is embodied in a canopy non-installation type baby carriage, the present invention is embodied in a baby carriage cover 115 that completely covers the frame 12 and the seat 13.

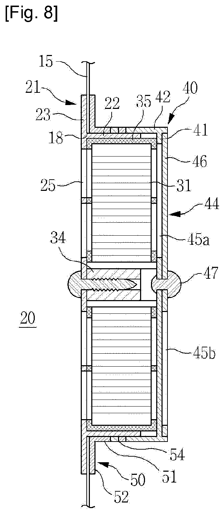

FIGS. 7 and 8 are a perspective view and a cross-sectional view of the second embodiment of the present invention. Like reference numerals are used for same elements as in the first embodiment, and detailed descriptions thereof will be omitted, and only a difference therebetween will be described in detail.

Reference numeral 50 is a fixing member. The fixing member 50 is configured in such a way that a fixing plate 52 is formed on an end of a support container 51 in a circumferential direction of the support container 51 and the support container 51 is inserted into the filter support container 22 so that the fixing plate 52 is in close contact with the periphery of the hole 18 formed in the baby carriage cover 15 and thus the support plate 23 and the fixing plate 52 are in close contact with the periphery of the hole 18 of the baby carriage cover 15 and fixing of the natural ventilation type filter 20 can be securely performed.

Also, a hanging unit 54 is installed on the periphery of the support container 51 and the support cylinder 42. Thus, the hanging unit 54 is configured in such a way that a plurality of hanging grooves 55 are formed on an outer circumferential surface of the support container 51 at uniform intervals and the same number of hanging protrusions 56 as the number of the hanging grooves 55 are formed on the support cylinder 42 so that the hanging protrusions 56 are hung on the hanging grooves 55 and coupling of the cover 40 can be firmly performed.

Although, according to the present invention, installation of the baby carriage covers 15 and 115 illustrated in FIGS. 1 and 6 is illustrated and described, the cover is not limited to the above description, and of course, the present invention can also be embodied in other well-known covers including a bottom sealed type cover.

### INDUSTRIAL APPLICABILITY

As described above, according to the present invention, when a cover is installed at a baby carriage so that an infant or child who rides on a seat of the baby carriage is blocked from atmospheric air and is protected from various contamination materials and ultraviolet (UV) rays, an inside of the baby carriage cover is naturally ventilated due to temperatures of the inside and outside of the baby carriage cover and/or a pressure difference therebetween so that the inside of the baby carriage cover can be maintained in a comfortable environment, an oxygen deficiency phenomenon is prevented, air heating in the baby carriage cover can be prevented, the infant or child who rides on the seat of the baby carriage is calmed, the infant's or child's health is kept in good condition and the infant or child takes comfortable sleep.

Furthermore, according to the present invention, when ventilation is performed as described above, when external air is introduced into the baby carriage cover, various contamination materials included in the atmospheric air are collected so that the inside of the baby carriage cover is maintained in a comfortable environment and the infant or child can ride on the seat in a pleasant and healthy state.

## Claims

1. A ventilation device for a baby carriage cover in which the baby carriage cover that covers a seat and a frame is installed at a baby carriage body, the ventilation device comprises at least one natural ventilation type filter installed at the baby carriage cover,
wherein the natural ventilation type filter comprises:
a casing in which a support plate is formed on an outer circumferential surface of one side of a filter support container, the support plate is fixed to a periphery of a hole formed in the baby carriage cover so that the filter support container is exposed to an outside of the baby carriage cover;
a filter element in which a plurality of protrusions are formed on a synthetic resin film, the synthetic resin film is charged, the charged synthetic resin film is wound in a cylindrical shape so as to form ventilation passages that are parallel to the filter support container, so that the filter element is inserted into the filter support container; and
a cover installed on an outer circumferential surface of the filter support container and including an air volume control unit.

2. The ventilation device of claim 1, wherein the natural ventilation type filter is installed to face both sidewalls of the baby carriage cover.

3. The ventilation device of claim 1, wherein the air volume control unit comprises a ventilation hole formed in a cover plate in a radial direction at uniform intervals, and the center of an air volume control plate in which a ventilation hole is formed in the radial direction, is combined with the cover plate using a pin.

4. The ventilation device of claim 1, wherein a support protrusion is formed in the center of one side of the filter support container so that a bobbin formed in the center of the filter element is inserted into the support protrusion.

5. The ventilation device of claim 1, wherein a support body is installed on an outer circumferential surface of the filter element.

6. A ventilation device for a baby carriage cover in which the baby carriage cover that covers a seat and a frame is installed at a baby carriage body, the ventilation device comprises at least one natural ventilation type filter installed at the baby carriage cover,
wherein the natural ventilation type filter comprises:
a casing in which a support plate is formed on an outer circumferential surface of one side of a filter support container, the support plate is fixed to a periphery of a hole formed in the baby carriage cover so that the filter support container is exposed to an outside of the baby carriage cover;
a filter element in which a plurality of protrusions are formed on a synthetic resin film, the synthetic resin film is charged, the charged synthetic resin film is wound in a cylindrical shape so as to form ventilation passages that are parallel to the filter support container, so that the filter element is inserted into the filter support container;
a fixing member in which a fixing plate is formed on an end of a support container in a circumferential direction of the support container and the support container is inserted into an outer circumferential surface of the filter support container so that the fixing plate is in close contact with a periphery of a hole formed in the baby carriage cover; and
a cover hung on the support container on an outer circumferential surface of the filter support container and including an air volume control unit.

7. The ventilation device of claim 6, wherein a hanging unit is installed on an outer circumferential surface of the support container and the support cylinder.

8. The ventilation device of claim 7, wherein the hanging unit is configured so that a plurality of hanging grooves are formed on the outer circumferential surface of the support container at uniform intervals and the same number of hanging protrusions as the number of the hanging grooves are formed on the support container so that the hanging protrusions are hung on the hanging grooves.

9. The ventilation device of claim 6, wherein the natural ventilation type filter is installed to face both sidewalls of the baby carriage cover.

10. The ventilation device of claim 6, wherein the air volume control unit comprises a ventilation hole formed in a cover plate in a radial direction at uniform intervals and the center of an air volume control plate in which a ventilation hole is formed in the radial direction, is combined with the cover plate using a pin.

11. The ventilation device of claim 6, wherein a support protrusion is formed in the center of one side of the filter support container so that a bobbin formed in the center of the filter element is inserted into the support protrusion.

12. The ventilation device of claim 6, wherein a support body is installed on an outer circumferential surface of the filter element.
